# EUROPÄISCHE PATENTSCHRIFT

(11) **EP 2 495 625 B1**
(45) Veröffentlichungstag und Bekanntmachung des Hinweises auf die Patenterteilung: **17.06.2020**
(21) Anmeldenummer: 11156919.0
(22) Anmeldetag: 04.03.2011
(51) Int. Cl.: G05B 19/05, G06F 21/00

(54) **Verfahren und Programmiersystem für die Authentifizierung eines sicherheitsrelevanten Programms einer Automatisierungseinrichtung**
Method and programming system for the authentication of a security program of an automation device
Procédé et système de programmation pour l'authentification d'un programme relevant de la sécurité d'un dispositif d'automatisation

(43) Veröffentlichungstag der Anmeldung: 05.09.2012
(73) Patentinhaber: Siemens Aktiengesellschaft, 80333 München (DE)
(72) Erfinder: Witte, Karl-Hermann, 90482 Nürnberg (DE)

(56) Entgegenhaltungen:
- EP-A1- 0 402 210
- DE-A1-102009 019 089
- FR-A1- 2 923 040

## Beschreibung

Die Erfindung betrifft ein Verfahren für die Authentifizierung eines sicherheitsrelevanten Programms einer Automatisierungseinrichtung gemäß dem Oberbegriff des Patentanspruchs 1, und ein Programmiersystem zum Erstellen und für den Vergleich von Signaturen gemäß dem Oberbegriff des Patentanspruchs 2.

Industrielle Automatisierungssysteme, insbesondere die darin enthaltenen speicherprogrammierbaren Steuerungen, werden mit Programmen (Software) programmiert, die durch ein Programmiersystem, häufig auch Engineering-System genannt, erstellt werden. Die Programme sind wesentlich für die Funktionalität der industriellen Automatisierungsanordnungen.

Für kritische Einsatzgebiete und die dabei gesteuerten Prozesse werden dabei spezielle industrielle Automatisierungseinrichtungen verwendet. Kritische Einsatzgebiete sind regelmäßig Anwendungen, bei denen ein Versagen oder eine Fehlfunktion einen hohen wirtschaftlichen Schaden zur Folge haben kann oder wo das Leben oder die Gesundheit von Menschen im Falle einer Fehlfunktion bedroht sind. Diese speziellen, sicherheitsgerichteten Automatisierungseinrichtungen werden oft auch als "F-Systeme" bezeichnet, wobei der Buchstabe "F" für das englische Wort "Failsafe" steht. Seitens der Hardware sind diese Systeme meist zumindest hinsichtlich ihrer kritischen Komponenten redundant (doppelt) ausgelegt, wobei eine Vielzahl technischer Maßnahmen zur Erhöhung der Betriebssicherheit und zur Erkennung von Fehlern bekannt sind. Hinsichtlich der Software (Programme) gilt dabei, dass im produktiven Betrieb nur zertifizierte Programme eingesetzt werden dürfen. Dies bedeutet, dass die zu verwendenden Programme ("F-Software") nachweislich die geforderte Funktionalität und Betriebssicherheit aufweisen müssen. Außerdem muss dafür Sorge getragen werden, dass das letztendlich auf die Automatisierungseinrichtung übertragene und dort zur Ausführung gebrachte Programm auch dem ursprünglich zertifizierten Programm entspricht und dass zwischenzeitlich keine unerlaubte Änderung dieses Programms vorgenommen wurde.

Die Druckschrift FR 2 923 040 A1 - Girard et al. "Procede de diagnostic d'un calculateur" schlägt vor, verschiedene Referenzinformationen aus einem zu authentifizierenden Programm auszulesen und diese mit Sollwerten zu vergleichen.

Die Druckschrift EP 0 402 210 A1 - Oisel et al. "Procede pour verfifier l'integrite d'un logiciel ou de donnes, et systeme pour le mise en oevre de oe procede" zeigt ein Verfahren, mit dem über eine Zeichenfolge eine Prüfsumme zwecks einer Authentifizierung gebildet werden kann.

Weiter ist es bekannt, den ausführbaren Code, also den bereits compilierten Objekt-Code, nach seiner Erstellung mittels eines (zertifizierten) Compilers einer Signaturberechnung (Prüfsumme, CRC; CRC = Cyclic Redundancy Check) zu unterwerfen. Diese Signatur des "Maschinenprogramms" wird gespeichert. Bei einer erneuten Compilierung oder nach einer Übertragung des Programms zu einer Automatisierungseinrichtung wird der dann erzeugte bzw. einzusetzende Maschinencode nochmalig einer Signaturberechnung unterzogen, wonach die Ergebnisse verglichen werden und wonach selbstverständlich eine Freigabe des Programms nur dann erfolgt, wenn beide Signaturen übereinstimmen.

Ein solches Verfahren ist in der DE 10 2009 019 089 A1 - Moosmann et al. "Verfahren und Vorrichtung zum Erstellen eines Anwenderprogramms für eine Sicherheitssteuerung" gezeigt, wobei über die funktionsrelevanten Anweisungen eines Maschinenprogramms eine Prüfsumme gebildet wird.

Heutige Automatisierungseinrichtungen werden oft mittels grafischer Programmieroberflächen programmiert, wobei nicht direkt Quellcode in Form einer textbasierten Programmiersprache eingegeben wird, sondern wobei die Beziehungen zwischen Funktionen, Variablen und physikalischen Ein- und Ausgängen, die in Schnittstellen-Variablen abgebildet sind, mittels eines grafischen Editors festgelegt werden. Durch unterschiedliche grafische Darstellung in verschiedenen Editoren kann ein- und dasselbe Programm bei mehreren Compilier-Vorgängen leicht unterschiedlichen, aber funktionsgleichen Maschinencode erzeugen. In solchen Fällen kann eine Signatur auf Basis des erzeugten Codes nicht mehr für die Kontrolle des fertigen Programms herangezogen werden. Ein weiteres Problem besteht darin, dass sicherheitsgerichtete Programme häufig aus einer großen Anzahl einzelner Funktionen und Programmzweigen bestehen. Dies bedeutet, dass bei einer Änderung in einem einzigen der Programmzweige die gesamte Signatur nicht mehr mit der ursprünglichen Signatur übereinstimmt, so dass das gesamte Programm erneut zertifiziert werden muss. Es ist oft nicht leicht nachvollziehbar, in welchem der Programmzweige eine Änderung stattgefunden hat bzw. auf welche anderen Programmzweige solche Änderungen Auswirkungen haben, so dass eine isolierte Überprüfung des veränderten Teils eines Programms oft nicht möglich ist. So ist auch nach Änderungen nur eines Programmzweiges oder eines Programmteils, die keine Auswirkung auf andere sicherheitsrelevante Programmteile haben, eine erneute Zertifizierung des gesamten sicherheitsrelevanten Programms erforderlich.

Es ist also eine Aufgabe der vorliegenden Erfindung, die Absicherung sicherheitsrelevanter Programme von Automatisierungseinrichtungen zu verbessern.

Es ist eine zentrale Idee der erfindungsgemäßen Lösung der Aufgabe, dass jede Benutzereingangs- oder Ausgangsvariable eine Identifikation ("ID") auf Basis einer zugeordneten Beschreibung erhält, beispielsweise als Prüfwert über die Parametrierung einer Baugruppe, auf Basis einer absoluten Adresse, auf Basis symbolischer Adressen usw., so dass die Identifikation der Eingangs- oder Ausgangsvariablen eine Identifikation der Funktion des entsprechenden Programmzweiges ("Channel") darstellt. Dabei erhält jede Funktion ebenfalls eine eigene eindeutige Identifikation auf Basis aller Parametrierungen oder bekannter Abhängigkeiten von anderen Funktionen oder Programmzweigen ("Channels"). Dabei fließt in die jeweilige Identifikation alles das ein, was im Programmfluss vorher (alternativ: nachher) liegt, bzw. von einem datentechnischen "Signal" durchlaufen wird oder wurde. Dazu kann z.B. die Identifikation des im Programmfluß vorherigen (alternativ: nachfolgenden) Programmelementes in die Bildung der Identifikation des betrachteten Programmelementes einfließen. Jeder Parameter einer Funktion oder eines "Channels", dem noch keine eigene Identifikation zugeordnet ist, erhält eine Identifikation auf Basis der Identifikation der Funktion bzw. des Programmzweigs (Channel) und einem Strukturelement, dem der betreffende Parameter zugeordnet ist. Speicherelemente haben eine Variablen-Identifikation, die beispielsweise abhängig ist von einer Bezeichnung des Speicherelementes und von demjenigen Parameter, der dieser Speicherzelle oder diesem Speicherelement zuletzt zugeordnet wurde. Die erste (alternativ: letzte) Identifikation eines Speicherelementes innerhalb eines Programmzweiges entspricht dabei der Identifikation einer Eingangsvariablen oder alternativ einer Ausgangsvariablen ("IN-Channel", "OUT-Channel"). Die Gesamt-Signatur eines Programms soll dabei die Signatur über alle Identifikationen der Ausgangsvariablen (OUT-Channel) bzw. alternativ der erreichbaren Eingangsvariablen (IN-Channel) sein.

Die Lösung der Aufgabe stellt insbesondere ein Verfahren gemäß dem Patentanspruch 1 dar, wobei ein Verfahren für die Authentifizierung eines sicherheitsrelevanten Programms einer Automatisierungseinrichtung vorgeschlagen wird. Durch dieses Verfahren ist es möglich, hierarchisch über die sicherheitsrelevanten Teile bzw. Zweige eines Programms zunächst Einzelsignaturen und schließlich eine Gesamt-Signatur zu bilden, so dass geänderte Programmteile identifiziert und separat überprüft werden können. Zudem bietet die Signaturbildung über die strukturellen Abhängigkeiten einzelner Programmelemente den Vorteil, dass Änderungen, beispielsweise in einem Object-Code, die nicht funktionsrelevant sind, ohne einen Einfluss auf die Signatur bleiben. Somit sind die einzelnen Signaturen und die Gesamt-Signatur prinzipiell unabhängig von der exakten Darstellung des Source-Codes und auch von der konkreten Darstellung des Object-Codes.

Die Aufgabe wird außerdem durch ein Programmiersystem zur Erstellung eines sicherheitsrelevanten Programms gemäß dem Oberbegriff des Patentanspruchs 2 gelöst. Dabei wird ein Programmiersystem zur Erstellung eines sicherheitsrelevanten Programms für eine sicherheitsgerichtete industrielle Automatisierungseinrichtung vorgeschlagen. Durch ein solches Programmiersystem können die Signaturen einzelner Programmzweige und Gesamt-Signaturen erstellt und verglichen werden, wobei funktional unerhebliche Unterschiede in einem Source-Code oder Object-Code keinen Einfluss auf die Signaturen haben, wogegen funktionale Änderungen in einzelnen Programmzweigen erkannt und isoliert werden können.

Vorteilhaft werden die auf die einzelnen Schnittstellen-Variablen bezogenen Signaturen im Fall einer Abweichung der Gesamt-Signatur von einer Soll-Gesamt-Signatur zur Identifizierung eines von einem Sollzustand abweichenden der Programmteile verwendet, wobei die auf die einzelnen Schnittstellen-Variablen bezogenen Signaturen mit diesen zugeordneten Soll-Signaturen verglichen werden. Damit lassen sich diejenigen Programmteile und Programmzweige isolieren, in denen tatsächlich eine funktionale Änderung stattgefunden hat, so dass bei Änderungen in einem komplexen Programmgefüge nur die relevanten Programmteile erneut geprüft und zertifiziert werden müssen.

Für die Anzahl der sicherheitsrelevanten Schnittstellen-Variablen können vorteilhaft die sicherheitsrelevanten Ausgangsvariablen des Programms verwendet werden, wobei in die Berechnung der Signaturen zu diesen Schnittstellen-Variablen die Identifikationen der in dem betreffenden Programmpfad mit der Ausgangsvariablen jeweils verwendeten Eingangsvariablen mit einbezogen werden. Gerade bei komplexen Automatisierungsanordnungen hat dies den Vorteil, dass mit der AusgangsVariablen, die einem physikalischen Ausgang einer Steuerungseinrichtung regelmäßig entspricht, die von Änderungen betroffenen Aktoren- und Maschinenteile direkt identifiziert werden können. Bei der Betrachtung der Ausgangsvariablen als Schnittstellen-Variablen werden vorteilhaft zur Berechnung der auf die Schnittstellen-Variablen bezogenen Signaturen die Identifikationen in Reihenfolge der bei Programm-Abarbeitung durchlaufenen Programmelemente des jeweiligen Programmelementes des jeweiligen Programm-Pfades gebildet. Umgekehrt kann es bei einigen Anwendungsfällen sinnvoll sein, die auf die Eingangs-Schnittstellen-Variablen (die Sensoren-Werte abbilden) bezogenen Programmzweige und Programmpfade zu betrachten; in einem solchen Fall werden zur Berechnung der auf die Schnittstellen-Variablen bezogenen Signaturen die Identifikationen in umgekehrter Reihenfolge der Programmabarbeitung zur Signaturbildung herangezogen.

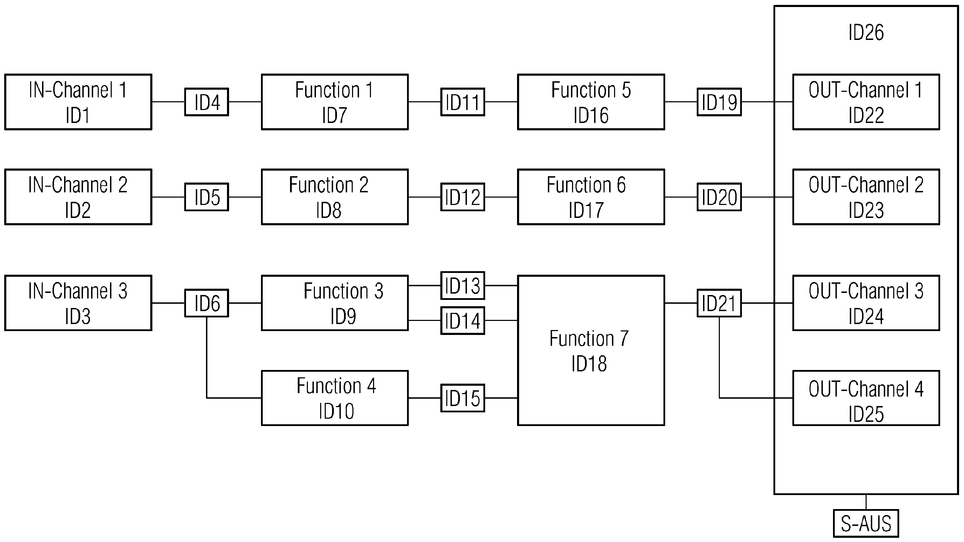

Ein Ausführungsbeispiel eines erfindungsgemäßen Verfahrens wird nachfolgend anhand der Zeichnung erläutert.

Dabei zeigt die einzige Figur in schematischer Darstellung Eingangsvariablen, Ausgangsvariablen und Funktionen eines sicherheitsgerichteten Automatisierungsprogramms.

In der Figur sind als sicherheitsrelevante Eingangs-Variablen die IN-Channel 1, 2, 3 dargestellt, die sicherheitsrelevanten Ausgangsvariablen OUT-Channel 1, 2, 3 sowie Funktionsbausteine Function 1, ..., 7. Dabei wird der sicherheitsrelevante physikalische Ausgang S-AUS der Automatisierungseinrichtung durch die benannten Ausgangs-Schnittstellenvariablen OUT-Channel 1, ..., 4 gebildet.

Im Folgenden werden die einzelnen Signaturen, die später zu einer Gesamt-Signatur verarbeitet werden, auf die Ausgangs-Schnittstellenvariablen OUT-Channel 1, ..., 4 bezogen; entsprechend werden vier Programmzweige betrachtet bzw. unterschieden. In einer alternativen, hier nicht dargstellten Ausführungsform kann die Gesamt-Signatur auch über die Eingangs-Schnittstellen-Variablen IN-Channel 1, ..., 3 errechnet werden; in einem solchen Fall wird zwischen 3 relevanten Programmzweigen ("Kanälen", "Channel") unterschieden.

Für die Signaturberechnung werden zunächst alle Programmelemente, denen eine Identifikation ID1, ..., ID25 zugeordnet wird, entsprechend dem Programmfluss aufgelistet. Als Programmelemente werden dabei Eingangs-Schnittstellen-Variablen, Ausgangs-Schnittstellenvariablen, Funktionen, Parameter, Variablen, Zwischenwerte (Baustein-Schnittstellen) etc. gewertet. Für alle Programmelemente werden entsprechend der Reihenfolge der zuvor erstellten Liste zunächst jeweils diejenigen Programmelemente bestimmt, bzw. ausgewählt, die für die Funktionalität dieses entsprechenden Programmelementes relevant sind. Dies bedeutet, dass für jedes Programmelement, dem eine Identifikation ID1, ..., ID25 zugeordnet werden soll, die damit funktional verknüpften anderen Programmelemente bestimmt werden. Die Identifikation des dabei aktuell betrachteten Programmelements wird dabei unter Einbeziehung der Identifikationen ID1, ..., ID25 der anderen relevant damit verknüpften Programmelemente gebildet, wobei Programmelemente, denen bereits eine Identifikation zugeordnet wurde, mit eben dieser Identifikation bei der Bildung der Identifikation des aktuell betrachteten Programmelementes einfließen, so dass also die Identifikationen der anderen, relevant verknüpften Programmelemente in die Identifikationen des aktuell betrachteten Programmelementes eingehen. Programmelemente, denen noch keine Identifikation zugeordnet ist, gehen mit einem Default-Wert für den Typ dieses Programmelementes in die Identifikation des aktuell betrachteten Programmelementes ein. Bezogen auf die Ausgangs-Schnittstellenvariable OUT-Channel 1 bedeutet dies, dass die Identifikation ID22 aus den Identifikationen ID1, 4, 7, 11, 16, 19 gebildet wird. Da jedoch in der Identifikation ID19 bereits die bezogen auf den Programmfluß vorherigen Identifiktaionen ID1, 4, 7, 11, 16 eingeflossen sind, wird de facto neben den eigenen Eigenschaften des Programmelementes OUT-Channel 1 nur die Identifikation ID19 in die Bildung der Identifikation ID 22 einbezogen. Entsprechend werden die Identifikationen ID23, 24, 25 der anderen Ausgangs-Schnittstellenvariablen OUT-Channel 2, 3, 4 gebildet.

Die dabei erzielten relevanten Ergebnisse, hier also die Identifikationen ID22, 23, 24, 25, die sich also beispielsweise auf alle sicherheitsgerichteten Ausgabewerte der Automatisierungseinrichtung beziehen, werden zu einer Gesamt-Signatur verknüpft, nämlich der Identifikation ID26. Die Verknüpfung der einzelnen Identifikationen ID22, 23, 24, 25 wird dabei vorteilhaft derart gewählt, dass das Ergebnis eindeutig ist. So können beispielsweise die Ausgangs-Schnittstellenvariablen OUT-Channel 1, 2, 3, 4 nach einer Absolutadresse sortiert in das Gesamtergebnis ID26 eingehen oder eine kommutative Verknüpfung wie XOR gewählt werden. Entsprechendes gilt für die Errechnung der Identifikationen ID1, ..., 21 der betrachteten einzelnen "Channel".

Wie bereits erwähnt, können in einer alternativen Ausführungsform die relevanten Programmelemente entsprechend dem Programmfluss auch rückwärts betrachtet werden. In diesem Fall ergibt sich die Gesamt-Signatur aus den Eingangs-Schnittstellen-Variablen bzw. den diesen zugeordneten Identifikationen ID1, 2, 3.

Ein Standard-Verhalten kann vorteilhaft zumindest teilweise neutral in die Identifikationen eingerechnet werden.

In einer besonders vorteilhaften Ausgestaltung können in die Gesamt-Signatur ID26 auch die Version von bei der Programmierung verwendeten Bibliotheken, Compiler-Versionen etc. zugeordnet mit eingerechnet werden. Anstelle einer direkten Einbeziehung dieser Werte in die Gesamt-Signatur ID26 können die Informationen auch einzelnen Programmelementen oder einem separat dafür stellvertretend angelegten Programmelement oder einer einzigen Eingangs- oder Ausgangs-Schnittstellenvariable als relevante Eigenschaft zugeordnet werden. Diesem Gedanken folgend können ganz allgemein relevante Systemeigenschaften als Funktion modelliert werden, deren Eingangs- oder Ausgangs-Schnittstellen oder Variablen mit den Funktionen und Zweigen des Anwenderprogramms über virtuelle Parameter verbunden sind. Dabei signalisieren die Eingänge den Einfluss einer Funktion auf die Systemeigenschaft.

Die Identifikationen ID1, ..., 25 können für den semantischen Vergleich von Programmen genutzt werden. Wenn die Identifikationen sowohl vorwärts (wie beschrieben) als auch rückwärts (wie in der alternativen Ausführungsform) bestimmt werden, kann damit der Bereich, in dem sich Änderungen ergeben haben, präzise eingegrenzt werden.

Das vorgeschlagene Verfahren ist parametrierbar. Dabei kann eine Signatur bzw. eine Methode zur Signatur-Errechnung gewählt werden, die eine gesuchte relevante Information enthält bzw. offenbart. Dabei kann beispielsweise feststellt werden, ob sich in einem Programm irgendetwas geändert hat, ob ein Source-Code geändert wurde, auf welche Ausgaben (Ausgangs-Schnittstellenvariablen) sich eine Änderung auswirkt und, als weiteres Beispiel, auf welche Ausgangs-Schnittstellenvariablen sich eine Eingangs-Schnittstellenvariable überhaupt auswirkt. Dabei kann die Gesamt-Signatur derart berechnet werden, dass nur relevante oder interessante Programmteile berücksichtigt werden. Änderungen, die lediglich eine Standardfunktion eines Programms betreffen, haben somit nicht automatisch einen Einfluss auf eine "zertifizierungs-relevante" Gesamt-Signatur. Ein semantischer Vergleich ist auf Basis dieser Signaturberechnung möglich.

## Patentansprüche

1. Verfahren für die Authentifizierung eines sicherheitsrelevanten Programms einer speicherprogrammierbaren Steuerung,
wobei in einem Quellcode des Programms Ein- und Ausgänge der speicherprogrammierbaren Steuerung als Schnittstellen-Variablen abgebildet sind und die Schnittstellen-Variablen mit Programmelementen graphisch verknüpft sind,
wobei im Quellcode jeder Schnittstellen-Variablen, jedem Programmelement und jedem in einem Programmelement verwendeten Speicherelement eine eindeutige Identifikation zugewiesen wird,
**dadurch gekennzeichnet,**
**dass** für eine Anzahl Schnittstellen-Variablen jeweils eine dieser Schnittstellen-Variable zugeordnete Signatur über die Identifikationen der im jeweiligen Programmpfad verwendeten Programmelemente, Speicherelemente und Schnittstellen-Variablen errechnet wird,
derart, dass für eine Schnittstellen-Variable in Form eines Ausgangs alles das in die Berechnung der Signatur einfließt, was im Programmfluss vorher liegt und dass für eine Schnittstellen-Variable in Form eines Eingangs alles das in die Berechnung der Signatur einfließt, was im Programmfluss nachher liegt und
**dass** die resultierenden einzelnen Signaturen zur Identifizierung geänderter Programmteile verwendet werden.

2. Programmiersystem zur Erstellung eines sicherheitsrelevanten Programms für eine sicherheitsgerichtete speicherprogrammierbare Steuerung,
wobei in einem Quellcode des Programms Ein- und Ausgänge der speicherprogrammierbaren Steuerung als Schnittstellen-Variablen abgebildet sind und die Schnittstellen-Variablen mit Programmelementen graphisch verknüpfbar sind,
wobei im Quellcode jeder Schnittstellen-Variablen, jedem Programmelement und jedem in einem Programmelement verwendeten Speicherelement eine eindeutige Identifikation zugewiesen ist,
**dadurch gekennzeichnet,**
**dass** das Programmiersystem derart eingerichtet ist,
für eine Anzahl Schnittstellen-Variablen jeweils eine dieser Schnittstellen-Variable zugeordnete Signatur über die Identifikationen der im jeweiligen Programmpfad verwendeten Programmelemente, Speicherelemente und Schnittstellen-Variablen zu errechnen,
derart, dass für eine Schnittstellen-Variable in Form eines Ausgangs alles das in die Berechnung der Signatur einfließt, was im Programmfluss vorher liegt und dass für eine Schnittstellen-Variable in Form eines Eingangs alles das in die Berechnung der Signatur einfließt, was im Programmfluss nachher liegt und
die resultierenden einzelnen Signaturen zur Identifizierung geänderter Programmteile zu verwenden.

## Claims

1. Method for authenticating a security-relevant program of a programmable logic controller,
wherein inputs and outputs of the programmable logic controller are mapped as interface variables in a source code of the program and the interface variables are graphically linked to program elements,
wherein a unique identification is assigned in the source code to each interface variable, each program element and each memory element used in a program element,
**characterized**
**in that**, for each of a number of interface variables, a signature associated with this interface variable is calculated using the identifications of the program elements, memory elements and interface variables used in the respective program path,
such that,
for an interface variable in the form of an output, everything beforehand in the program flow is used to calculate the signature and that, for an interface variable in the form of an input, everything afterwards in the program flow is used to calculate the signature, and
**in that** the resulting individual signatures are used to identify changed program portions.

2. Programming system for creating a security-relevant program for a security-oriented programmable logic controller,
wherein inputs and outputs of the programmable logic controller are mapped as interface variables in a source code of the program and the interface variables are graphically linkable to program elements,
wherein a unique identification is assigned in the source code to each interface variable, each program element and each memory element used in a program element,
**characterized**
**in that** the programming system is configured so as to calculate, for each of a number of interface variables, a signature associated with this interface variable using the identifications of the program elements, memory elements and interface variables used in the respective program path,
such that,
for an interface variable in the form of an output, everything beforehand in the program flow is used to calculate the signature and that, for an interface variable in the form of an input, everything afterwards in the program flow is used to calculate the signature, and
to use the resulting individual signatures to identify changed program portions.

## Revendications

1. Procédé d'authentification d'un programme pertinent pour la sécurité d'un automate programmable,
dans lequel, dans un code source du programme, des entrées et sorties de l'automate programmable sont reproduites sous la forme de variables d'interface et les variables d'interface sont combinées graphiquement à des éléments de programme,
dans lequel, dans le code source, il est affecté une identification univoque à chaque variable d'interface, à chaque élément de programme et à chaque élément de mémoire utilisé dans un élément de programme,
**caractérisé**
**en ce que**, pour un certain nombre de variables d'interface, on calcule, par les identifications des éléments de programme, des éléments de mémoire et des variables d'interface utilisés dans le chemin de programme respectif, respectivement, une signature associée à ces variables d'interface,
de manière à ce que, pour une variable d'interface, sous la forme d'une sortie, il entre dans le calcul de la signature tout ce qui est avant dans le flux de programme et en ce que, pour une variable d'interface sous la forme d'une entrée, il entre dans le calcul de la signature tout ce qui est après dans le flux du programme et
**en ce que** l'on utilise les diverses signatures qui s'ensuivent pour l'identification de parties de programme modifiées.

2. Système de programmation pour produire un programme pertinent du point de vue de la sécurité pour un automate programmable de sécurité,
dans lequel, dans un code source du programme, des entrées et sorties de l'automate programmable sont reproduites sous la forme de variables d'interface et les variables d'interface peuvent être combinées graphiquement à des éléments de programme,
dans lequel, dans le code source, une identification univoque est affectée à chaque variable d'interface, chaque élément de programme et chaque élément de mémoire utilisé dans un élément de programme,
**caractérisé**
**en ce que** le système de programmation est conçu de manière à calculer, pour un certain nombre de variables d'interface, par les identifications des éléments de programme, éléments de mémoire et variables d'interface utilisés dans le chemin de programme respectif, respectivement, une signature associée à cette variable d'interface,
de manière à ce que, pour une variable d'interface, sous la forme d'une sortie, il entre dans le calcul de la signature tout ce qui est avant dans le flux de programme et en ce que, pour une variable d'interface sous la forme d'une entrée, il entre dans le calcul de la signature tout ce qui est après dans le flux du programme et
à utiliser les signatures individuelles qui s'ensuivent pour l'identification de parties de programme modifiées.
